# EUROPÄISCHE PATENTANMELDUNG

(11) **EP 2 505 258 A2**
(43) Veröffentlichungstag der Anmeldung: **03.10.2012**
(21) Anmeldenummer: 12154497.7
(22) Anmeldetag: 08.02.2012
(51) Int. Cl.: B01D 65/10, G01N 15/08

(54) **Verfahren zum Überprüfen eines Membranfiltrationsmoduls einer Filtrationsanlage**

(30) Priorität: 31.03.2011 DE 102011006545
(71) Anmelder: Krones AG, 93073 Neutraubling (DE)
(72) Erfinder: Zacharias, Jörg, 93096 Köfering (DE); Mayr, Stephan, 93051 Regensburg (DE)
(74) Vertreter: Grünecker, Kinkeldey, Stockmair & Schwanhäusser

(57) **Zusammenfassung**

Die Erfindung umfasst ein Verfahren zum Überprüfen eines Membranfiltrationsmoduls einer Filtrationsanlage, wobei das Membranfiltrationsmodul ein Abzugsrohr für das Filtrat und ein Membranelement zum Filtern einer Flüssigkeit umfasst, umfassend die Schritte Befüllen des Membranfiltrationsmoduls mit einer Flüssigkeit, so dass das Membranelement vollständig in der Flüssigkeit eingetaucht ist, und Einleiten von Druckluft in das Abzugsrohr.

## Beschreibung

Die vorliegende Erfindung betrifft ein Verfahren zum Überprüfen eines Membranfiltrationsmoduls einer Filtrationsanlage, wobei das Membranfiltrationsmodul ein Abzugsrohr für das Filtrat aufweist. Die Erfindung betrifft außerdem einen Adapater zum Verbinden mit einem Abzugsrohr eines Membranfiltrationsmoduls einer Filtrationsanlage.

Membranfiltrationsmodule finden beispielsweise bei der Wasseraufbereitung Anwendung. In der Regel sind dies Ultrafiltrationsanlagen. Dabei werden Kunststoffmembranen eingesetzt, deren Porengröße in einem Bereich von etwa 1 µm bis 0,001 µm liegt. In einigen Bereichen werden auch keramische Membranen verwendet.

Eine häufige Bauform von Membranfiltrationsmodulen umfasst ein zentrales Abzugsrohr, das von den Membranen umgeben wird und über das das Filtrat aus dem Membranfiltrationsmodul geleitet werden kann. Die Membranen sind dabei meist in einem Gehäuse oder einer Kartuschenhülse angeordnet, mit der sie über ein sogenanntes Potting verbunden sind. Im Fall von Kunststoffmembranen handelt es sich dabei üblicherweise um ein Epoxi-Potting, über das die Kunststoffmembranen mit dem Gehäuse oder der Kartuschenhülse fest verbunden beziehungsweise vergossen sind.

Die Membrane erfahren Belastungen häufig durch ungewollte Druckschläge oder durch zu schnell veränderliche Temperaturgradienten bei Reinigungsvorgängen. Dadurch kann es zu Schädigungen der Membrane oder der Verbindung zwischen Potting und Membrane bzw. Gehäuse kommen. Besonders beim Einsatz von Kunststoffmembranen können diese direkt am Übergang zum Potting abreißen oder sogar platzen.

Um die Integrität eines Membranfiltrationsmoduls zu überprüfen wird üblicherweise entweder ein Druckhaltetest oder ein sogenannter Bubble-Point Test durchgeführt. Dies erfolgt in der Regel, oft auch automatisch, im Anschluss an eine Reinigung, um die Anlage wieder für weitere Produktion frei zu geben.

Beim Druckhaltetest wird das vollständig befüllte Modul von einer Seite her mit Luft leer gedrückt, wobei der Druck unter dem Druck, der zur Permeation durch die Membran führt, liegt. Die Gegenseite wird dann drucklos und oben offen gesetzt. Nach einer Ausgleichszeit wird der Druck gehalten und der Druckabfall während einer vorherbestimmten Zeitdauer beobachtet. Der Druckabfall darf einen bestimmten Wert nicht überschreiten, um den Test zu bestehen.

Ein Nachteil dieses Verfahrens ist es, dass daraus nicht bekannt wird, was im Membranfiltrationsmodul kaputt ist, d. h. eine Membran oder das Potting, und auch die Stärke der Beschädigung kann daraus nicht abgeleitet werden. Auch kann nicht festgestellt werden, welche Membran und bei welcher Position diese defekt ist.

Daher wird häufig ein sogenannter Bubble-Point Test durchgeführt, der händisch erfolgt. Dazu wird das Membranfiltrationsmodul aus der Filtrationsanlage ausgebaut und in eine separate Wanne mit Wasser eingebracht. Die Membranen werden dann mit Druck beaufschlagt und austretende Blasen liefern eine Aussage über Ort, Art und Stärke von möglichen Defekten.

Ein Nachteil dieses Verfahrens ist es jedoch, dass es wegen des notwendigen Ausbaus des Membranfiltrationsmoduls sehr umständlich ist und zu längeren Stillstandszeiten der Filtrationsanlage führen kann.

Daher ist es Aufgabe der vorliegenden Erfindung, ein Verfahren zum Überprüfen eines Membranfiltrationsmoduls einer Filtrationsanlage bereitzustellen, das in vereinfachter Weise eine zuverlässige Überprüfung der Integrität des Membranfiltrationsmoduls erlaubt.

Die Erfindung stellt ein Verfahren zum Überprüfen eines Membranfiltrationsmoduls einer Filtrationsanlage bereit, wobei das Membranfiltrationsmodul ein Abzugsrohr für das Filtrat und ein Membranelement zum Filtern einer Flüssigkeit umfasst, umfassend die Schritte:
Befüllen des Membranfiltrationsmoduls mit einer Flüssigkeit, so dass das Membranelement vollständig in der Flüssigkeit eingetaucht ist, und
Einleiten von Druckluft in das Abzugsrohr.

Dadurch, dass die Druckluft in das Abzugsrohr eingeleitet wird, ist es möglich, ein Testverfahren ähnlich dem Bubble-Point Verfahren im eingebauten Zustand des Membranfiltrationsmoduls durchzuführen. Dadurch kann auf vereinfachte Weise die Integrität des Membranfiltrationsmoduls zuverlässig überprüft werden.

Mit dem Verfahren kann also die Funktion oder Integrität des Membranfiltrationsmoduls, insbesondere des Membranelements, überprüft werden.

Das Membranfiltrationsmodul kann insbesondere in einer Filtrationsanlage angeordnet oder eingebaut sein. Das Membranfiltrationsmodul kann in der Filtrationsanlage insbesondere in einer vertikalen Position oder aufrecht angeordnet sein. Mit anderen Worten kann die Längsachse des Membranfiltrationsmoduls in der Filtrationsanlage vertikal verlaufen.

Das Membranelement des Membranfiltrationsmoduls kann eine oder mehrere Hohlfaser-, Platten- oder Wickelmembrane umfassen. Als Material für die Membrane kann Kunststoff, beispielsweise Polyethersulfon, Keramik oder ein Sintermetall verwendet werden.

Das Membranfiltrationsmodul kann insbesondere eine Wandung umfassen, die das Membranelement umgibt. Die Wandung kann insbesondere zylindrisch ausgebildet sein und insbesondere an der Außenseite eines zylindrisch ausgebildeten Membranelements angeordnet sein. Die ein oder mehreren Membrane des Membranelements können mit der Wandung über ein Potting oder eine Verpottung verbunden, insbesondere vergossen, sein. Als Potting kann im Fall eines Kunststoffmembranelements insbesondere ein Epoxydharz verwendet werden. Die ein oder mehreren Membrane können auch in mehreren Bereichen, beispielsweise in den Endbereichen des Membranelements, mit der Wandung verbunden sein. Mit anderen Worten kann das Potting mehrere, insbesondere voneinander getrennte, Bereiche aufweisen, in denen die eine oder mehreren Membrane mit der Wandung verbunden sind. Durch das Potting können auch mehrere Membrane, insbesondere mehrere Hohlfasermembrane, miteinander verbunden oder vergossen sein.

Als Flüssigkeit kann insbesondere Wasser verwendet werden.

Als Filtrat oder Permeat kann hierin insbesondere das gefilterte Medium verstanden werden. Das zu filternde Medium kann als Unfiltrat bezeichnet werden. Das von den Membranen zurückgehaltene Medium kann als Retentat bezeichnet werden.

Das Membranfiltrationsmodul kann als Dead-End- oder Cross-Flow-Modul ausgebildet sein.

Als Druckluft oder Pressluft kann hierin komprimierte Luft verstanden werden, die insbesondere einen Druck über 1 bar aufweist. Dieser kann mit einem Druckminderer auf die, je nach Membrantyp, erforderliche Höhe gedrosselt werden, insbesondere derart dass die eingeleitete Druckluft einen Druck zwischen 0,1 bar und 300 bar, insbesondere zwischen 0,1 bar und 100 bar, insbesondere zwischen 0,1 bar und 1,5 bar aufweist. Der Druck kann auch kleiner als 0,7 bar sein. Der Druck kann jedoch auch ohne Druckminderer in der erforderlichen Höhe bereitgestellt werden. Die Druckluft kann also Luft mit einem Druck zwischen 0,1 bar und 300 bar, insbesondere zwischen 0,1 bar und 100 bar, insbesondere zwischen 0,1 bar und 1,5 bar, insbesondere kleiner als 0,7 bar, sein.

Das Membranfiltrationsmodul kann zum Überprüfen in der Filtrationsanlage verbleiben. Mit anderen Worten können die Schritte des Verfahrens zum Überprüfen der Integrität des Membranfiltrationsmoduls, insbesondere des Membranelements, bei eingebautem Membranfiltrationsmodul durchgeführt werden. Das Membranfiltrationsmodul muss also zum Überprüfen nicht aus der Filtrationsanlage ausgebaut werden. Dadurch kann das Überprüfen des Membranfiltrationsmoduls deutlich vereinfacht werden.

Das Membranfiltrationsmodul kann dabei insbesondere in einem Gehäuse, beispielsweise einem Edelstahlgehäuse, der Filtrationsanlage angeordnet sein. In diesem Fall kann die Flüssigkeit in das Gehäuse eingebracht werden, sodass das Membranelement, insbesondere das gesamte Membranfiltrationsmodul, in der Flüssigkeit eingetaucht ist.

Die Filtrationsanlage kann zum Filtern einer Flüssigkeit in der Lebensmittelindustrie, insbesondere der Getränkeindustrie, verwendet werden. Mit anderen Worten kann die Filtrationsanlage eine Filtrationsanlage in der Lebensmittelindustrie, insbesondere der Getränkeindustrie, sein.

Das Verfahren kann außerdem ein Feststellen, ob eine oder mehrere Luftblasen in der Flüssigkeit aufsteigen, umfassen. Wenn Luftblasen in der Flüssigkeit festgestellt werden, kann das Membranfiltrationsmodul als defekt eingestuft werden. Wenn keine Luftblasen in der Flüssigkeit aufsteigen, kann das Membranfiltrationsmodul als intakt oder unbeschädigt eingestuft werden.

Es können insbesondere eine oder mehrere Hohlfasermembrane bestimmt werden, aus denen jeweils wenigstens eine Luftblase aufsteigen. Dadurch kann die exakte defekte Kapillare identifiziert werden.

Es kann außerdem die Zeitdauer zwischen dem Beginn des Einleitens der Druckluft und dem Auftreten von einer oder mehreren Luftblasen in der Flüssigkeit bestimmt werden. Dadurch kann eine zusätzliche Information über einen möglichen Defekt auf einfache Weise erhalten werden.

Das Verfahren kann außerdem ein Bestimmen oder wenigstens Abschätzen einer Position eines Defekts des Membranelements basierend auf der bestimmten Zeitdauer umfassen. Dadurch kann eine Position eines möglichen Defekts auf einfache Weise bestimmt oder wenigstens abgeschätzt werden.

Das Verfahren kann außerdem ein Bestimmen oder wenigstens Abschätzen einer Ursache und/oder Stärke eines Defekts basierend auf beobachteten Luftblasen umfassen, wenn eine oder mehrere Luftblasen in der Flüssigkeit festgestellt werden. Beispielsweise kann basierend auf dem Ort, an dem die Luftblase aufsteigt, festgestellt werden, in welchem Bereich des Membranfiltrationsmoduls eine defekte Membran angeordnet ist. Aus der Menge der austretenden Luftblasen kann außerdem die Stärke des Defekts bestimmt oder wenigstens abgeschätzt werden. Dadurch kann auch die erforderliche Sensibilität zur Überprüfung und Lokalisation des Defektes gegeben sein.

Es kann Druckluft aus pneumatischen Ventilansteuerungen der Filtrationsanlage zum Einleiten in das zentrale Abzugsrohr verwendet werden. Dadurch kann eine separate Druckluftbereitstellungsvorrichtung eingespart werden.

Der Druck der Druckluft einer Druckluftbereitstellungsvorrichtung kann mittels eines Druckminderers reduziert werden. Dadurch kann der Druck auf einen gewünschten Wert eingestellt werden.

Das Verfahren kann außerdem ein Verbinden eines Adapters mit dem Abzugsrohr umfassen, wobei die Druckluft über den Adapter in das Abzugsrohr eingeleitet wird.

Der Adapter kann insbesondere von oben mit dem Abzugsrohr verbunden werden. Mit anderen Worten kann der Adapter mit einer oberen Öffnung des Abzugsrohres verbunden werden.

Das Abzugsrohr kann insbesondere entlang der Längs- oder Symmetrieachse des Membranelements verlaufen. Mit anderen Worten kann das Abzugsrohr ein zentrales Abzugsrohr sein also insbesondere konzentrisch zur Symmetrieachse angeordnet sein.

Das Abzugsrohr kann derart ausgebildet sein, dass das Filtrat aus dem Membranelement in das Abzugsrohr leitbar ist. Beispielsweise kann das Abzugsrohr im Bereich des ersten Längsabschnitts eine oder mehrere Öffnungen aufweisen, beispielsweise als Bohrungen, Nuten und/oder Spalte bzw. Ringspalte.

Das Abzugsrohr kann im Wesentlichen zylindrisch ausgebildet sein. Das Abzugsrohr kann also eine zylindrische Mantelfläche und zwei gegenüberliegende Enden oder Mündungen umfassen.

Das Abzugsrohr kann von dem Membranelement umgebend ausgebildet sein. Insbesondere kann die Mantelfläche des Abzugsrohrs, insbesondere vollständig, von dem Membranelement umgeben sein.

Die Erfindung stellt außerdem einen Adapter zum Verbinden mit einem Abzugsrohr eines Membranfiltrationsmoduls einer Filtrationsanlage bereit, der derart ausgebildet ist, dass Druckluft über den Adapter in das Abzugsrohr einleitbar ist.

Mit anderen Worten kann der Adapter zum Durchführen eines oben beschriebenen Verfahrens verwendet werden. Dadurch ermöglicht der Adapter ein einfaches und zuverlässiges Überprüfen eines Membranfiltrationsmoduls einer Filtrationsanlage.

Der Adapter kann einen Druckluftanschluss umfassen.

Der Adapter kann insbesondere einen im Inneren des Adapters verlaufenden Kanal umfassen, der den Druckluftanschluss mit einer Außenseite des Adapters verbindet, die insbesondere im Abzugsrohr des Membranfiltrationsmoduls angeordnet ist, wenn der Adapter mit dem Abzugsrohr verbunden ist.

Mit anderen Worten kann der Adapter im verbundenen Zustand mit dem Abzugsrohr wenigstens teilweise im Inneren des Abzugsrohrs angeordnet sein.

Das Membranfiltrationsmodul kann insbesondere eines oder mehrere der oben genannten Merkmale aufweisen.

Der Adapter kann insbesondere lösbar mit dem Abzugsrohr verbindbar sein, insbesondere zerstörungsfrei lösbar. Beispielsweise kann der Adapter formschlüssig oder kraftschlüssig mit dem Abzugsrohr verbindbar sein, zum Beispiel über eine Steckverbindung.

Der Adapter kann außerdem eine Fixiervorrichtung zum Fixieren des Adapters an einem Teil des Membranfiltrationsmoduls und/oder der Filtrationsanlage umfassen. Dadurch ist es möglich, den Adapter sicher mit dem zentralen Abzugsrohr zu verbinden.

Die Fixiervorrichtung kann insbesondere derart ausgebildet sein, dass die Position des Adapters relativ zum Membranfiltrationsmodul und/oder zur Filtrationsanlage mit Hilfe der Fixiervorrichtung verstellbar ist. Wenn das Membranfiltrationsmodul in der Filtrationsanlage in einer vertikalen Ausrichtung angeordnet ist, kann der Adapter über die Fixiervorrichtung insbesondere höhenverstellbar sein.

Die Fixiervorrichtung und der Adapter können lösbar miteinander verbunden sein, insbesondere zerstörungsfrei lösbar, beispielsweise über eine Schraubverbindung. Die Fixiervorrichtung und der Adapter können jedoch auch unlösbar oder fest miteinander verbunden sein, insbesondere also nicht zerstörungsfrei lösbar.

Die Erfindung stellt außerdem ein System umfassend einen oben beschriebenen Adapter und eine Druckluftbereitstellvorrichtung bereit.

Der Adapter kann insbesondere eines oder mehrere der oben genannten Merkmale aufweisen.

Bei der Druckluftbereitstellvorrichtung kann es sich beispielsweise um einen Kompressor handeln. Alternativ kann die Druckluftbereitstellvorrichtung auch einer pneumatischen Ventilansteuerung der Filtrationsanlage entsprechen oder eine solche umfassen. Dadurch kann ein kostengünstigeres System realisiert werden, da ein separater Kompressor eingespart werden kann. Das System kann außerdem eine Druckluftleitung umfassen, die die Druckluftbereitstellvorrichtung und den Adapter verbindet. Über die Druckluftleitung kann die Druckluft in den Adapter und über den Adapter in das Abzugsrohr geleitet werden.

Das System kann außerdem einen Druckminderer umfassen. Dadurch kann der Druck der Druckluft aus der Druckluftbereitstellvorrichtung auf einen gewünschten Wert eingestellt werden.

Weitere Merkmale und Vorteile der Erfindung werden nachfolgend anhand der beispielhaften Figuren erläutert. Dabei zeigt
- Figur 1: eine Illustration eines beispielhaften Membranfiltrationsmoduls;
- Figur 2: eine Illustration eines Teils einer Filtrationsanlage umfassend ein beispielhaftes Membranfiltrationsmodul;
- Figur 3: eine Illustration eines Verfahrens zum Überprüfen eines Membranfiltrationsmoduls einer Filtrationsanlage; und
- Figur 4: eine Illustration eines beispielhaften Adapters zum Verbinden mit einem Abzugsrohr eines Membranfiltrationsmoduls.

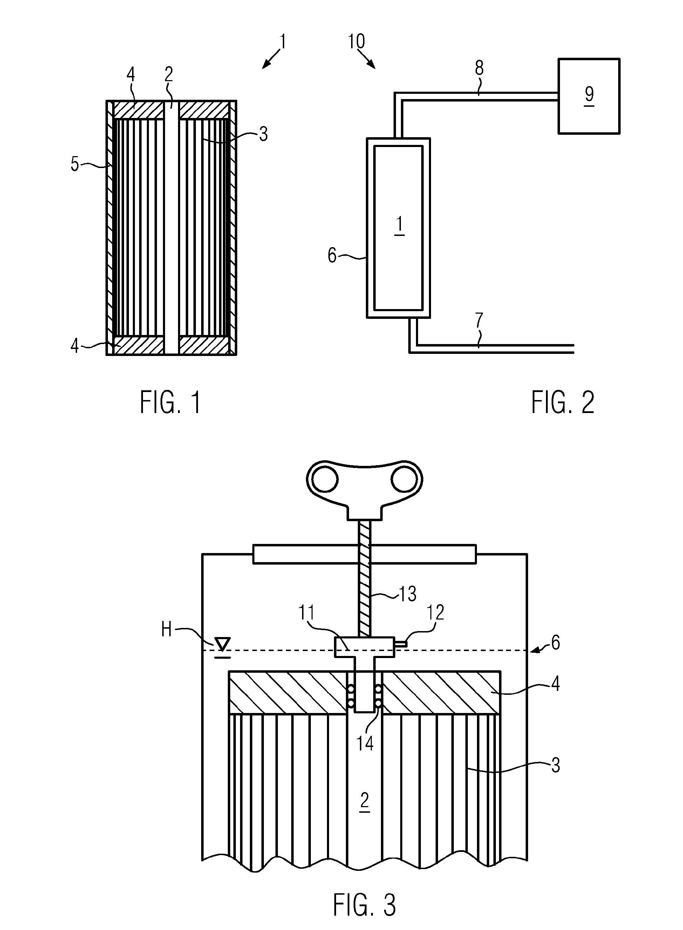

In Figur 1 ist ein beispielhaftes Membranfiltrationsmodul 1 mit einem zentralen Abzugsrohr 2 gezeigt. Membranfiltration findet beispielsweise bei der Wasseraufbereitung Anwendung. Dabei handelt es sich üblicherweise um Ultrafiltrationsanlagen. Das in Figur 1 gezeigte Membranfiltrationsmodul 1 ist ein sogenanntes Hohlfaserfiltrationsmodul. Mit anderen Worten sind die Kunststoffmembranen in Form von mehreren Hohlfasern 3 ausgebildet. Ein Membranfiltrationsmodul kann dabei einige hundert bis einige tausend Hohlfasermembranen umfassen. Beispielsweise können 1000 bis 5000 Hohlfasermembrane vorgesehen sein. Die (mittlere) Porengröße der Membran kann zwischen 0,8 µm und 0,02 µm liegen.

Durch ein sogenanntes Potting 4 werden die Hohlfasermembrane 3 am oberen und unteren Ende mit einer Kartuschenhülse 5 fest verbunden beziehungsweise vergossen.

Das beispielhafte Membranfiltrationsmodul 1 der Figur 1 umfasst außerdem ein zentrales Abzugsrohr 2. Über dieses Abzugsrohr 2 kann das Filtrat aus dem Membranfiltrationsmodul 1 abgeleitet werden.

Das Abzugsrohr ist in diesem Beispiel zentral, also entlang der Symmetrieachse des Membranfiltrationsmoduls, ausgebildet. Prinzipiell kann das Abzugrohr jedoch auch dezentral verlaufen.

Obwohl in diesem Beispiel Hohlfasermembranen 3 dargestellt sind, kann das Membranfiltrationsmodul 1 als Membrane auch Flachmembrane oder Mittelmembrane aufweisen.

Figur 2 zeigt das beispielhafte Membranfiltrationsmodul 1 in einem Einbauzustand in einer Filtrationsanlage 10. Das Membranfiltrationsmodul 1 ist dabei in einem Gehäuse 6, beispielsweise aus Edelstahl, angeordnet. Über eine Zuleitung 7 wird ein Unfiltrat in einen unteren Bereich des Membranfiltrationsmoduls 1 eingeleitet. Von dort wird es in die Hohlfasermembrane eingebracht. Das untere Ende des zentralen Abzugsrohrs ist dabei verschlossen. Das zu filternde Medium wird derart unter Druck in die Membrane geleitet, dass das Filtrat oder Permeat durch die Poren der Membrane gedrückt wird, während zu filternde Stoffe, beispielsweise Mikroorganismen, durch die Membrane zurückgehalten werden. Das Filtrat gelangt dann in das zentrale Abzugsrohr, über welches es aus dem Filtrationsmodul ausgebracht werden kann.

Das Filtrat kann dann über eine Abzugsleitung 8 in ein Verarbeitungselement 9 geleitet werden, in dem das Filtrat weiterverarbeitet wird.

In diesem Beispiel ist das Membranfiltrationsmodul 1 vertikal in der Filtrationsanlage 10 angeordnet.

Figur 3 illustriert ein beispielhaftes Verfahren zum Überprüfen der Funktion oder Integrität eines Membranfiltrationsmoduls einer Filtrationsanlage. Das Membranfiltrationsmodul verbleibt dabei in der Filtrationsanlage, insbesondere in dem Gehäuse 6 der Filtrationsanlage. Im oberen Bereich des Gehäuses 6 kann eine Abdeckung entfernt werden, so dass das Membranfiltrationsmodul im Gehäuse 6 von außen zugänglich wird. Danach kann das Gehäuse 6 mit einer Flüssigkeit bis zur Höhe H (in Figur 3 durch die punktierte Linie dargestellt) abgelassen oder befüllt werden. Dadurch sind sowohl die Membrane 3 als auch das Potting 4 vollständig in der Flüssigkeit, beispielsweise Wasser, eingetaucht.

Mit dem zentralen Abzugsrohr 2 wird in diesem Fall ein Adapter 11 verbunden. Zur Abdichtung der Verbindung sind Dichtringe 14 vorgesehen. Der Adapter kann insbesondere vor dem Befüllen des Gehäuses 6 mit Flüssigkeit mit dem zentralen Abzugsrohr 2 verbunden werden.

Der Adapter 11 umfasst einen Druckluftanschluss 12. Über diesen kann der Adapter 11 mit einer Druckluftbereitstellvorrichtung, beispielsweise einem Kompressor oder der gelösten Druckluftleitung einer nahen pneumatischen Ventilansteuerung, verbunden werden. Über die Druckluftbereitstellvorrichtung, eine Druckluftleitung (beide sind in Figur 3 nicht dargestellt) und den Adapter 11 wird dann Druckluft in das zentrale Abzugsrohr 2 eingeleitet.

Wenn die Membrane 3 unbeschädigt sind, kann die Luft nicht in das Innere der Hohlmembrane 3 vordringen. Folglich ist in der Flüssigkeit keine Blasenbildung zu beobachten. Wenn jedoch das Potting 4 und/oder die Membrane 3 defekt sind, kann Druckluft in das Innere der Membrane 3 beziehungsweise in das Potting 4 gelangen. Dies führt zu einer Blasenbildung, die an der Oberfläche der Flüssigkeit im Behälter 6 festgestellt werden kann. Durch die Lokalisierung der Blasen kann der etwaige Ort des Defekts bestimmt, gegebenenfalls sehr genau festgestellt werden. Durch die zeitliche Beobachtung zwischen dem Auftreten der Blasen und dem Druckanlegen kann auch die vertikale Position des Defekts bestimmt oder wenigstens abgeschätzt werden, bevor weitreichende Ausbaumaßnahmen eingeleitet werden müssen. Zudem erlaubt die Art und Weise bzw. Menge der auftretenden Luftblasen eine Beurteilung der Stärke der Beschädigung. Dies erlaubt eine gezielte Entscheidung über den weiteren Einsatz des Membranfiltrationsmoduls und/oder über notwendige Konsequenzen und/oder Maßnahmen.

Da das Membranfiltrationsmodul für dieses Überprüfungsverfahren nicht aus der Filtrationsanlage, insbesondere aus dem Gehäuse 6, ausgebaut werden muss, ist das Verfahren einfach und ohne lange Stillstandszeiten der Filtrationsanlage möglich.

Der beispielhafte Adapter 11 in Figur 3 umfasst außerdem eine Fixiervorrichtung 13, mit der die Position des Adapters 11 bezüglich des Gehäuses 6 und/oder des Membranfiltrationsmoduls festgelegt oder fixiert werden kann. Insbesondere kann die Fixiervorrichtung 13 derart ausgebildet sein, dass sie den Adapter 11 auch nach dem Einleiten von Druckluft in Position hält.

Die beispielhafte Fixiervorrichtung 13 ist außerdem derart ausgebildet, dass der Adapter relativ zum Membranfiltrationsmodul und/oder zum Gehäuse 6 höhenverstellbar ist. Dafür umfasst die Fixiervorrichtung 13 ein Gewinde und eine Schraubvorrichtung. Eine Fixierung des Adapters 11 kann über ein Einspreizen und Befestigen einer Querverstrebung der Fixiervorrichtung 13 über beispielsweise einen Mantel-Clamp für den Moduldeckel des Gehäuses 6 erfolgen.

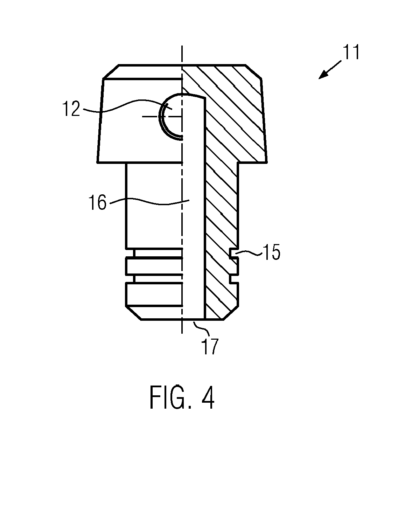

Figur 4 zeigt eine Illustration eines beispielhaften Adapters 11 zum Verbinden mit einem zentralen Abzugsrohr 2 eines Membranfiltrationsmoduls einer Filtrationsanlage, beispielsweise für ein Verfahren wie in Figur 3 illustriert. Dafür ist die linke Hälfte des illustrierten Adapters 11 als Seitenansicht und die rechte Hälfte als Querschnitt dargestellt.

Der Adapter 11 umfasst insbesondere einen Druckluftanschluss 12 und einen damit verbundenen Kanal 16. Über den Druckluftanschluss 12 und den Kanal 16 kann Druckluft vom Druckluftanschluss 12 zu einer Außenseite 17 des Adapters geleitet werden, die im Abzugsrohr des Membranfiltrationsmoduls angeordnet ist, wenn der Adapter mit dem Abzugsrohr verbunden ist. Mit anderen Worten kann über den Kanal 16 und den Druckluftanschluss 12 Druckluft in das Abzugsrohr eingeleitet werden.

Alternativ zu einem eigenen Druckluftanschluss kann der Adapter auch nur einen Kanal, insbesondere in Form einer Durchgangsöffnung, umfassen, in dem eine Druckluftleitung angeordnet werden kann, insbesondere wobei die Druckluftleitung mit einer Druckluftbereitstellvorrichtung verbunden ist. Dadurch kann der Adapter besonders einfach ausgebildet sein.

An der Außenseite des Adapters 11 sind außerdem Vertiefungen in Form von Nuten 15 ausgebildet. In diese Vertiefungen 15 können Dichtungsringe des Abzugsrohrs eingreifen und damit ein dichtes Verbinden des Adapters 11 mit dem Abzugsrohr ermöglichen.

Ein derartiger Adapter ist ein verhältnismäßig kleines und damit leicht zu transportierendes Bauteil. Damit kann ein oben beschriebenes Verfahren auf einfache Weise für mehrere räumlich getrennte Membranfiltrationsmodule durchgeführt werden.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Verfahren zum Überprüfen eines Membranfiltrationsmoduls einer Filtrationsanlage, wobei das Membranfiltrationsmodul ein Abzugsrohr (2) für das Filtrat und ein Membranelement zum Filtern einer Flüssigkeit umfasst, umfassend die Schritte:
Befüllen des Membranfiltrationsmoduls mit einer Flüssigkeit, so dass das Membranelement vollständig in der Flüssigkeit eingetaucht ist; und
Einleiten von Druckluft in das Abzugsrohr (2).

2. Verfahren nach Anspruch 1, wobei das Filtrationsmodul in der Filtrationsanlage verbleibt.

3. Verfahren nach Anspruch 1 oder 2, außerdem umfassend ein Feststellen, ob eine oder mehrere Luftblasen in der Flüssigkeit aufsteigen.

4. Verfahren nach Anspruch 3, außerdem umfassend Bestimmen der Zeitdauer zwischen dem Beginn des Einleitens der Druckluft und dem Auftreten von einer oder mehreren Luftblasen in der Flüssigkeit.

5. Verfahren nach Anspruch 4, außerdem umfassend Bestimmen oder wenigstens Abschätzen einer Position eines Defektes des Membranelements basierend auf der bestimmten Zeitdauer.

6. Verfahren nach einem der Ansprüche 3 ― 4, außerdem umfassend Bestimmen oder wenigstens Abschätzen einer Ursache und/oder Stärke eines Defekts basierend auf beobachteten Luftblasen, wenn eine oder mehrere Luftblasen in der Flüssigkeit festgestellt werden.

7. Verfahren nach einem der vorangegangenen Ansprüche, wobei Druckluft aus pneumatischen Ventilansteuerungen der Filtrationsanlage zum Einleiten in das Abzugsrohr (2) verwendet wird.

8. Verfahren nach einem der vorangegangenen Ansprüche, außerdem umfassend ein Verbinden eines Adapters (11) mit dem Abzugsrohr (2), wobei die Druckluft über den Adapter (11) in das Abzugsrohr (2) eingeleitet wird.

9. Adapter (11) zum Verbinden mit einem Abzugsrohr (2) eines Membranfiltrationsmoduls einer Filtrationsanlage, der derart ausgebildet ist, dass Druckluft über den Adapter (11) in das Abzugsrohr (2) einleitbar ist.

10. Adapter (11) nach Anspruch 9, wobei der Adapter (11) einen Druckluftanschluss (12) umfasst.

11. Adapter (11) nach Anspruch 10, wobei der Adapter (11) einen im Inneren des Adapters (11) verlaufenden Kanal (16) umfasst, der den Druckluftanschluss (12) mit einer Außenseite des Adapters (11) verbindet, die im Abzugsrohr (2) des Membranfiltrationsmoduls angeordnet ist, wenn der Adapter (11) mit dem Abzugsrohr (2) verbunden ist.

12. Adapter (11) nach einem der Ansprüche 9 ― 10, außerdem umfassend eine Fixiervorrichtung (13) zum Fixieren des Adapters (11) an einem Teil des Membranfiltrationsmoduls und/oder der Filtrationsanlage.

13. Adapter (11) nach Anspruch 12, wobei die Fixiervorrichtung (13) derart ausgebildet ist, dass die Position des Adapters (11) relativ zum Membranfiltrationsmodul und/oder zur Filtrationsanlage mit Hilfe der Fixiervorrichtung (13) verstellbar ist.

14. System umfassend einen Adapter (11) nach einem der Ansprüche 9 ― 13 und eine Druckluftbereitstellvorrichtung.

15. System nach einem der vorangegangenen Ansprüche, außerdem umfassend eine Druckluftleitung, die die Druckluftbereitstellvorrichtung und den Adapter (11) verbindet.
